Europäisches Patentamt

European Patent Office

Office européen des brevets

(19)

(11) EP 0 851 667 A1

(12) **EUROPÄISCHE PATENTANMELDUNG**

(43) Veröffentlichungstag:
01.07.1998 Patentblatt 1998/27

(51) Int. Cl.⁶: **H04N 1/44**

(21) Anmeldenummer: 97122623.8

(22) Anmeldetag: 22.12.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 24.12.1996 DE 19654342

(71) Anmelder: **Marks, Karl Michael**
**58642 Iserlohn (DE)**

(72) Erfinder: **Marks, Karl Michael**
**58642 Iserlohn (DE)**

(74) Vertreter:
**Sonnenschein, Guido et al**
**Sonnenschein & Porada,**
**Rechtsanwälte,**
**Lindenstrasse 27**
**47249 Duisburg (DE)**

(54) **Verfahren zur Übermittlung von Daten, insbesondere von Komprimierten Fax- und/oder Bilddaten**

(57)     Die Erfindung betrifft ein Verfahren zur Übermittlung von Facsimile- und / oder Bilddaten, bei welchem die Datensätze in komprimierte Form gebracht werden, wobei zur Kompression gängige adaptive arithmetische Kompressionsstandards zugrundegelegt sind. Um bei einem Verfahren der gattungsgemäßen Art bei Anwendung des genannten Komprimierungsverfahrens gleichzeitig eine sichere Verschlüsselung der Daten zu erreichen ist erfindungsgemäß vorgeschlagen, daß unter Zugrundelegung des Kompressionsalgorithmus beim Sender und beim Empfänger eine gleiche vom Standard abweichende Initialisierung von Kontextparametern und/oder der Datenformatierung und/oder der Adaptertabelle durch zusätzliche Encryptionsparameter vereinbart werden,
daß die zur Entschlüsselung notwendigen Encryptionsparameter separat übertragen werden , und am Empfänger beim Decodingprozess wieder miteingebunden werden.

EP 0 851 667 A1

**Beschreibung**

Die Erfindung betrifft ein Verfahren zur Übermittlung von Facsimile- und/oder Bilddaten, bei welchen die Datensätze in komprimierter Form vorliegen, wobei zur Kompression gängige adaptive arithmetische Kompressionsstandards zugrunde gelegt sind, gemäß Oberbegriff des Patentanspruches 1.

Bisherige bekannte Faxkomprimierungsverfahren sollen zukünftig im Zuge eines neuen Faxstandards abgelöst werden. Diesem neuen, als T.85 benannten Faxstandard soll ein arithmetisches Komprimierungsstandard JBIG (ISO 11544) zugrunde gelegt werden.

JBIG, sowie sein Vorgänger ABIC, sind adaptive, arithmetische Komprimierungsverfahren, die einen Bilddatenstrom in einen Binärbruch umsetzen.

Dies geschieht in zwei Stufen, nämlich in einer Bildvorverarbeitung und dem anschließenden eigentlichen adaptiven Codierungsverfahren.

Die Bildvorverarbeitung extrahiert die einzelnen Bildpunkte, welche als Daten hinterlegt sind und ordnet diesen ein sogenanntes Kontextwort zu, das mit den Datenbits benachbarter Bildpunkte korreliert ist. Dies heißt mit anderen Worten, daß der in einen Gesamtkontext eingebundene jeweilige Bildpunkt als Zusatzinformation dieses sogenannte Kontextwort aufweist, aus dem nicht nur die einzelnen Bildpunkte sondern auch die Einbindung in deren bildhafte Umgebung als Information hinterlegt sind. An den Rändern einer Bildpunktmatrix bzw. eines Bildes gelten dann spezielle Regeln für Kontextbits, die außerhalb des Bildes liegen. Im Falle von JBIG besteht dieser Kontext aus 10 benachbarten Bildpunkten, die entweder aus der aktuellen sowie der vorhergehenden Zeile oder aus der aktuellen und den beiden vorhergehenden Zeilen stammen. Darüber hinaus kann ein Kontextbit aus der vorhergehenden Zeile auf eine entferntere Position in der aktuellen Zeile verlegt werden, um horizontale Frequenzen zur Verbesserung der Kompressionsrate aufzunehmen. Diese Parameter sind programmierbar.

Ein solches Beispiel für die Einbindung eines Bildpunktes in einen entsprechenden Bildkontext ist aus IBM, Journal of Research and Development, Volume 32, Number 6, November 1988 zu entnehmen. Seite 779 und 780 zeigen die Einbindung einzelner Bildpunkte in den Gesamtkontext sowie deren Generierung.

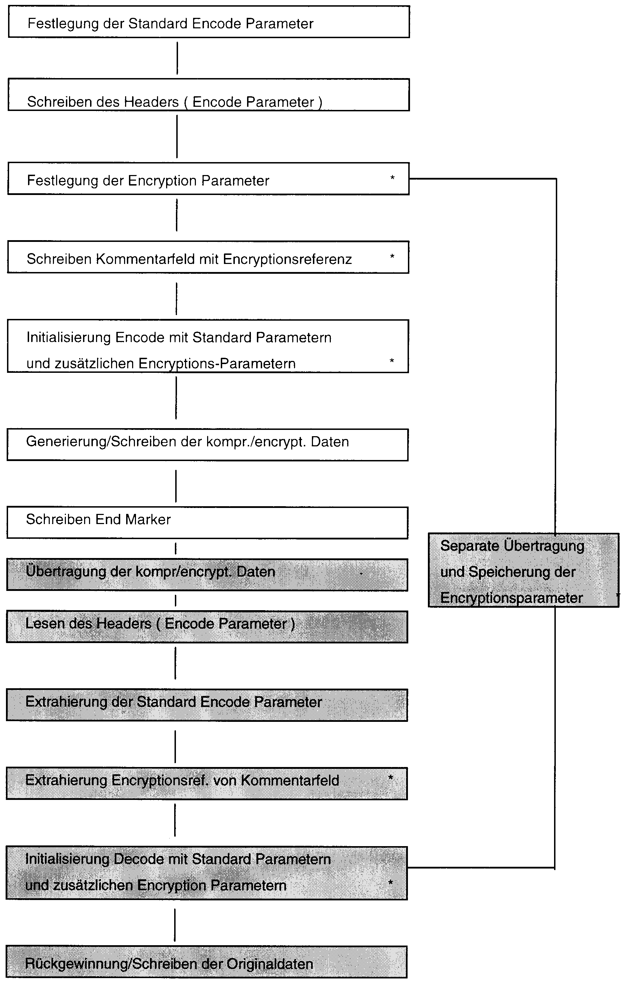

So ist auf Seite 778 dieser Veröffentlichung in Figur 3 sowohl der Kompressionsbetrieb als auch der Dekompressionsbetrieb beschrieben. Ein adaptiver arithmetischer Codierer besteht aus einem Adapter und dem sogenannten arithmetischen Codierer. Der Adapter enthält eine Speichertabelle, die z. B. im Falle von JBIG 1024 (2^10) Speicherstellen hat. Kontextbits werden als Index in den Speicher verwendet. Die Speicherstelle enthält den erwarteten Wert für den aktuellen Bildpunkt für die durch den Kontext definierte Umgebung, sowie einen Wahrscheinlichkeitswert für diesen Erwartungswert. Die Wahrscheinlichkeitsindizes sowie der Erwartungswert werden dynamisch adaptiert, um die Kompression zu optimieren. Die Wahrscheinlichkeitsindizes werden in eine arithmetische Zahl, die man als Intervallgröße definieren kann, umgesetzt. Je größer die Wahrscheinlichkeit eines Erwartungswertes ist, umso kleiner ist der Informationsgehalt beim Eintreten des Ereignisses und dementsprechend umso kleiner die entsprechende Intervallgröße. Für jedes zu codierende Datenbit gibt der Adapter eine Intervallgröße $Qe$ sowie die Information, ob das aktuelle Datenbit dem Erwartungswert entspricht oder nicht, an den arithmetischen Codierer. Der Codierer enthält einen Akkumulator $C$ zur Generierung des Codewortes sowie einen Akkumulator $A$, der die aktuelle Intervallgröße nachhält. Zu Beginn ist das Codewort $C = 0$ und das Intervall $A = 1,0000$. Für jedes Datenbit wird die Intervallgröße angepaßt; entspricht das Bit dem Erwartungswert, wird $A = A - Qe$, ansonsten wird $A = Qe$. Immer, wenn $A$ unter 0,5 sinkt, werden $A$ und $C$-Akkumulator solange zusammen nach links geschoben, bis $A$ wieder größer als 0,5 ist. $C$ wird entsprechend um $Qe$ erhöht oder bleibt gleich. Dadurch wird erreicht, daß mit einer begrenzten Akkumulatorlänge ein Binärbruch unbegrenzter Präzision generiert werden kann. Die Kompression beruht nun darauf, daß für Datenbits mit hoher Wahrscheinlichkeit $Qe$ klein ist und $Qe$ sehr oft von $A$ subtrahiert werden kann, bevor ein Unterlauf von $A$ entsteht und durch das gleichzeitige Schieben von $C$ ein Codebit erzeugt wird.

Der Dekodiervorgang verläuft entsprechend, in dem $C$ mit dem akkumulierten Codewort vorgeladen wird. Dann wird jeweils $Qe$ von $C$ versuchsweise subtrahiert. Kann der Wert ohne Unterlauf von $C$ subtrahiert werden, war $Qe$ beim Kodieren auch addiert worden - d.h., Datenbit = Erwartungswert -, andernfalls bleibt $C$ gleich und das Datenbit entsprach nicht dem Erwartungswert. $A$ wird genauso behandelt, wie beim Kodierprozeß.

Von diesem zukünftigen, an sich vorteilhaften Komprimierungsverfahren geht die vorliegende Erfindung aus. Die Komprimierung und anschließende sichere Dekomprimierung von insbesondere Fax- und/oder Bilddaten, berücksichtigt in diesem Kompressions / Dekompressionslauf jedoch keine Mechanismen wie die komprimiert übertragenen Bilddaten in einer geeigneten Weise verschlüsselt werden können, so daß nur der autorisierte Empfänger die übertragenen Daten lesen und/oder rekonstruieren kann.

Der Erfindung liegt somit die Aufgabe zugrunde, ein Verfahren zu schaffen, welches bei Anwendung des genannten Komprimierungsverfahrens gleichzeitig eine sichere Verschlüsselung der Daten vornimmt.

Die gestellte Aufgabe wird bei einem Verfahren der gattungsgemäßen Art erfindungsgemäß durch die kennzeichnenden Merkmale des Verfahrensanspruches 1 gelöst. Weitere vorteilhafte Ausgestaltungen der Erfindung sind in den Unteran-sprüchen angegeben.

Das Wesen der Erfindung besteht dabei darin, daß unter Zugrundlegung des Kompressionsalgorithmus beim Sender und Empfänger vorab eine gleiche vom Standard abweichende Initialisierung von Kontextparametern und/oder der Datenformatierung und/oder der Adaptertabelle vereinbart wird. Dadurch wird im wesentlichen das bekannte Verfahren in Elementen dazu im wesentlich so modifiziert, daß aus dem Kompressionslauf heraus Initialwerte für die Adaptertabelle erstellt werden, als sogenannte Encryptionsparameter.

Die vorliegende Erfindung beschreibt somit ein Verfahren, bei dem Sender und Empfänger vorab eine gleiche vom Standard abweichende Initialisierung von Kontextparamtern, Datenformatierung, und vor allem der Adaptertabelle mit ihren 8192 Bits vereinbaren. Dies ergibt dann folgerichtig mehr als 2 ^8192 Möglichkeiten, eine Verschlüsselungsinitialisierung vorzugeben. Eine derartige Komplexität gilt deshalb als sicher, da mit verfügbarem Rechenaufwand eine Dechiffrierung nicht mehr möglich ist. Insbesondere die Sequenzialität der Codegenerierung, die eine unvorhersehbare, von den Bilddaten abhängige Fortpflanzung eines jeden Fehlers - der durch die abweichende Initialisierung der Tabelle zwangsweise erzeugt wird - verursacht, stellt einen zusätzlichen Sicherheitsfaktor der Verschlüsselung dar. Darüberhinaus beansprucht das erfindungsgemäße Verfahren keine zusätzliche Hardware, die über die standardmäßig benötigte Hardware zur Realisierung des JBIG -Standards hinausgeht, d.h., es werden für die Realisierung des erfindungsgemäßen Verfahrens keine weitergehenden Hardwarekomponenten benötigt. Dies hat natürlich auch einen erheblichen Kosteneffekt.

Wenn auch die arithmetischen Codierverfahren in der vorliegenden Form vorwiegend zur Komprimierung von Bilddaten entwickelt wurden, so sind sie auch für andere Datenformen geeignet. Insofern bezieht sich die Erfindung nur auf insbesondere die Übertragung von Fax- und/oder Bilddaten. Ein besonderer Vorteil ist, daß ihre adaptive Natur verhindert, daß ihre Kompressionsraten im schlimmsten Fall nicht unter 0,85 sinken. D.h., selbst für Daten, die keine Bilddaten sind und die sich nicht gut komprimieren lassen, kann das Verfahren bei einem maximalen Overhead von ca. 15% im Datenvolumen für die Verschlüsselung verwendet werden. Ein Fall, bei dem der Kompressionsfaktor kleiner als 1 in der Praxis auftritt ist nach derzeitiger Kenntnis ausgesprochen selten.

Wesentlicher Punkt der Erfindung ist somit die Festlegung der Encryptionsparamter und deren verfahrensmäßige Einbindung. Der Begriff „Encryptionsparameter" ist quasi ein Sammelbegriff für mehrere Möglichkeiten der Verschlüsselung bei der vorliegenden Erfindung. Entweder werden die Initialwerte der Adaptertabelle zur Verschlüsselung verwendet und/oder ein Überschreiben der Standardparameter. Beides ist möglich und in erfindungsgemäßer Weise auch erlaubt. Entscheidend ist jedoch in beiden Fällen, daß der Satz von Encryptionsparametern separat übertragen wird, oder aber vorher zwischen Sender und Empfänger vereinbart ist. Dabei kann der Satz von Encryptionsparametern unter der übertragenen Referenz bei Sender und Empfänger abrufbar sein. Wesentlich ist hierbei, daß zum Zeitpunkt der eigentlichen Daten-übertragung der komprimierten Daten der verschlüsselte Datensatz im Gegensatz zum unverschlüsselten Datensatz nicht vollständig, bzw. in sich geschlossen, auswertbar ist, da , wie gesagt, die zusätzlichen Information zur Encryptionsreferenz „zunächst" nicht mit übertragen werden.

Die Erfindung ist in ihrem Verfahrensablauf als Flußdiagramm in der Zeichnung dargestellt und nachfolgend noch näher beschrieben.

Die Abbildung zeigt die erfindungsgemäße Verfahrensweise bzw. Modifizierung eines herkömmlichen JBIG Encode/Decodeprozesses, bei dem die erfindungsgemäße Encryption vorgenommen wird. Die mit einem Stern gekennzeichneten Verfahrensschritte, sind die in erfindungsgemäßer Weise zu einem herkömmlichen JBIG-Verfahren hinzugenommenen Verfahrensschritte. Somit kennzeichnen zum einen die mit einem Stern gekennzeichneten Verfahrensschritte die erfindungsgemäße Vorgehensweise, sowie auch die erfindungsgemäße Einbindung in das bereits bekannte Verfahren nach dem JBIG-Standard.

Zuerst erfolgt als erster Verfahrensschritt eine Festlegung der Standard-Encodeparameter. Diese werden nach einem gängigen Algorithmus generiert bzw. vereinbart. In einem zweiten Verfahrensschritt wird ein sogenannter Header beschrieben, welcher die generierten Encodeparameter enthält.

Hernach werden die Encryptionsparamter vereinbart bzw. festgelegt. Diese werden einer Referenz zugeordnet und dann getrennt vom weiteren Verfahren separat übertragen und gespeichert. Im weiteren Verfahren wird das Kommentarfeld mit der Encryptionsreferenz geschrieben. Sodann erfolgt eine Initialisierung der Encodeparamter mit Standardparametern und zusätzlichen Encryptionsparametern. Anschließend erfolgt die Generierung bzw. das Schreiben der komprimierten erfindungsgemäß verschlüsselten Daten. Abgeschlossen wird dieser Vorgang durch das Schreiben eines Endmarkers. Sodann erfolgt die Übertragung der komprimierten verschlüsselten Daten. Die Übertragung sowie die Verfahrensschritte beim Empfänger sind zur Unterscheidung von den Verfahrensschritten beim Sender in der Zeichnung grau abgesetzt. Am Empfänger wird zunächst der sogenannte, oben bereits beschriebene Haeder gelesen, welcher die Encodeparameter enthält. Dann erfolgt eine Extrahierung der Standard-Encodeparameter. In erfindungsgemäßer Weise folgt auch hier wiederum ein mit Stern gekennzeichneter Verfahrensschritt, der das Extrahieren dieser Encryptionsreferenz vom Kommentarfeld bewirkt.

Sodann erfolgt die Initialisierung des Decodeprozesses mit Standardparametern und den zusätzlichen Encryptionsparametern. Bei diesem Verfahrensschritt liegen die separat übertragenen und gespeicherten Encryptionsparameter aus einer separaten Übertragung auch wieder vor. Sodann erfolgt die Rückgewinnung und das Schreiben der Originaldaten bzw. die Wiederherstellung des übertragenen Datenfeldes, insbesondere der Bilddaten.

Die separat übertragenen Encryptionsparameter können entweder beim Sender oder Empfänger zwischengespeichert sein, so daß sie erst bei Initialisierung des Decodingprozesses abgerufen oder übertragen werden. Zur weiteren Absicherung ist es möglich das Verfahren so abzustimmen, daß die Encryptionsparameter vom Sender gesondert abgerufen werden.

Es ist zur Absicherung auch vorteilhaft, die Encryptionsparameter nicht sequentiell über denselben Sendekanal, sondern über einen von der übrigen Datenübertragung getrennten Sendekanal, oder gar über einen völlig anderen Übertragungsweg zu übertragen.

**Patentansprüche**

1. Verfahren zur Übermittlung von Facsimile- und / oder Bilddaten, bei welchem die Datensätze in komprimierte Form gebracht werden, wobei zur Kompression gängige adaptive arithmetrische Kompressionsstandards zugrundegelegt sind, **dadurch gekennzeichnet,** daß unter Zugrundelegung des Kompressionsalgorithmus beim Sender und beim Empfänger eine gleiche vom Standard abweichende Initialisierung von Kontextparametern und/oder der Datenformatierung und/oder der Adaptertabelle durch zusätzliche Encryptionsparameter vereinbart werden, daß die zur Entschlüsselung notwendigen Encryptionsparameter separat übertragen werden , und am Empfänger beim Decodingprozess wieder miteingebunden werden.

2. Verfahren zur Übermittlung von Facsimile- und / oder Bilddaten , nach Anspruch 1, **dadurch gekennzeichnet,** daß am Sendeort nach dem Festlegen und Schreiben der Encode-Parameter eine Festlegung der Encryptionsparameter erfolgt, und anschließend lediglich eine Encryptionsreferenz in ein mit den komprimierten Daten zu übertragendes Kommentarfeld eingeschrieben wird.

3. Verfahren zur Übermittlung von Facsimile- und / oder Bilddaten , nach Anspruch 2, **dadurch gekennzeichnet,** daß nachdem Encode-Parameter und Encryptionsparameter initialisiert sind, die entsprechende Codierung und Übermittlung der Daten erfolgt.

4. Verfahren zur Übermittlung von Facsimile- und / oder Bilddaten , nach Anspruch 3,

**dadurch gekennzeichnet,** daß nachdem die Daten beim Empfänger angekommen sind, unter anderem eine Extrahierung der Encryptionsreferenz aus dem ebenfalls übertragenen Kommentarfeld erfolgt, und daß bei anschließender Initialisierung des Decoding-Prozesses wiederum zu den Standard Parametern die separat übermittelten Encryptionsparameter zur Rückgewinnung der übermittelten Daten miteingebunden werden.

5. Verfahren zur Übermittlung von Facsimile- und / oder Bilddaten , nach Anspruch 4, **dadurch gekennzeichnet,** daß die separat übertragenen Encryptionsparameter beim Sender und/oder beim Empfänger abgespeichert werden, und erst bei Initialisierung des Decoding Prozesses abgerufen oder übertragen werden.

6. Verfahren zur Übermittlung von Facsimile- und / oder Bilddaten , nach Anspruch 5, **dadurch gekennzeichnet,** daß die Encryptionsparameter vom Empfänger gesondert beim Sender abgerufen werden.

7. Verfahren zur Übermittlung von Facsimile- und / oder Bilddaten , nach einem oder mehreren der vorhergehenden Ansprüche, **dadurch gekennzeichnet,** daß zur Übertragung der Encryptionsparameter ein gesonderter, von der komprimierten und encrypierten Bilddatenübertragung verschiedener Übertragungsweg verwendet wird.

8. Verfahren zur Übermittlung von Facsimile- und / oder Bilddaten , nach einem oder mehreren der vorhergehenden Ansprüche , **dadurch gekennzeichnet,** daß bei Verwendung weitestgehend herkömmlicher, zur Facsimile- und / oder Bilddatenübertragung benutzter Hardware, das beschriebene Verfahren zumindest hinsichtlich der Generierung und Einbindung der Encryptionsparameter durch eine Programmierung realisiert ist.

| Festlegung der Standard Encode Parameter |
|---|

| Schreiben des Headers ( Encode Parameter ) |
|---|

| Festlegung der Encryption Parameter * |
|---|

| Schreiben Kommentarfeld mit Encryptionsreferenz * |
|---|

| Initialisierung Encode mit Standard Parametern und zusätzlichen Encryptions-Parametern * |
|---|

| Generierung/Schreiben der kompr./encrypt. Daten |
|---|

| Schreiben End Marker |
|---|

| Übertragung der kompr/encrypt. Daten . |
|---|

| Lesen des Headers ( Encode Parameter ) |
|---|

| Extrahierung der Standard Encode Parameter |
|---|

| Extrahierung Encryptionsref. von Kommentarfeld * |
|---|

| Initialisierung Decode mit Standard Parametern und zusätzlichen Encryption Parametern * |
|---|

| Rückgewinnung/Schreiben der Originaldaten |
|---|

| Separate Übertragung und Speicherung der Encryptionsparameter |
|---|

EP 0 851 667 A1

**Europäisches Patentamt**

# EUROPÄISCHER RECHERCHENBERICHT

Nummer der Anmeldung

EP 97 12 2623

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 506 405 A (CANON KK)<br>* Zusammenfassung; Abbildungen 1,25,26 *<br>* Spalte 9, Zeile 1 - Spalte 10, Zeile 30; Abbildungen 28-30 *<br>--- | 1-8 | H04N1/44 |
| Y | DE 44 39 032 A (JUNG ANDREAS ;SCHROEDER KLAUS GUENTER (NL))<br>* Zusammenfassung; Abbildung 1 *<br>--- | 1-8 | |
| A | US 5 216 712 A (K. SHIMODA ET AL.)<br>* Zusammenfassung; Abbildungen 7,9 *<br>--- | 1 | |
| A | EP 0 706 284 A (MITA INDUSTRIAL CO LTD)<br>* Zusammenfassung *<br>* Spalte 1, Zeile 1 - Spalte 2, Zeile 50 *<br>--- | 1 | |
| A | EP 0 614 308 A (EASTMAN KODAK CO)<br>* Zusammenfassung; Abbildungen 2,3 *<br>--- | 1 | |
| A | PATENT ABSTRACTS OF JAPAN<br>vol. 018, no. 350 (E-1572), 30.Juni 1994<br>& JP 06 090361 A (RICOH CO LTD), 29.März 1994,<br>* Zusammenfassung *<br>--- | 1,2,4 | **RECHERCHIERTE SACHGEBIETE (Int.Cl.6)**<br><br>H04N |
| A | PATENT ABSTRACTS OF JAPAN<br>vol. 013, no. 155 (E-743), 14.April 1989<br>& JP 63 311871 A (RICOH CO LTD), 20.Dezember 1988,<br>* Zusammenfassung *<br>--- | 1 | |
| A | PATENT ABSTRACTS OF JAPAN<br>vol. 095, no. 009, 31.Oktober 1995<br>& JP 07 154602 A (CANON INC), 16.Juni 1995,<br>* Zusammenfassung *<br>----- | 1,3 | |

Der vorliegende Recherchenbericht wurde für alle Patentansprüche erstellt

| Recherchenort | Abschlußdatum der Recherche | Prüfer |
|---|---|---|
| BERLIN | 25.März 1998 | Kassow, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

6